# DEMANDE DE BREVET EUROPEEN

(11) **EP 2 182 696 A1**
(43) Date de publication de la demande: **05.05.2010**
(21) Numéro de dépôt: 08305766.1
(22) Date de dépôt: 31.10.2008
(51) Int. Cl.: H04L 29/06

(54) **Procédé d'établissement d'une liaison entre les applications d'une carte d'authentification d'un abonné et un réseau IMS**

(71) Demandeur: Gemalto SA, 92190 Meudon (FR)
(72) Inventeur: Seif, Jacques, 75020 Paris (FR); Ganem, Hervé, 94800 Villejuif (FR)

(57) **Abrégé**

L'invention concerne un procédé d'établissement d'une liaison sécurisée entre une carte d'authentification d'un abonné à un réseau de télécommunications, la carte étant connectée à un terminal mobile, le procédé consistant à :
- établir une liaison sécurisée entre le terminal et un réseau de type IMS ;
- partager les ressources de la liaison sécurisée entre le terminal et la carte.

## Description

Le domaine de l'invention est celui des systèmes de télécommunications mobiles et concerne plus particulièrement un perfectionnement apporté à une architecture standardisée connue sous le nom d'IMS (IP Multimedia Subsystem en langue anglaise).

Une architecture IMS permet de fournir aux utilisateurs de réseaux de télécommunications de type GSM, GPRS ou UMTS des services multimédias fixes et mobiles. Ce système utilise la technologie VolP (Voice over IP) basée sur une implémentation 3GPP standardisée de SIP *(Session Initiation Protocol)* fonctionnant sur un protocole standard IP (Internet Protocol).

Une architecture IMS fournit une couche intermédiaire au coeur des réseaux pour passer du mode appel classique (mode circuit) au mode session. Autrement dit, il permet d'ouvrir plusieurs sessions au cours d'une même communication. A titre illustratif, IMS offre la possibilité de mélanger les composants multimédias, par exemple de rajouter une session de chat à de la vidéo ou d'envoyer une photo pendant une conversation téléphonique. Il est également possible, grâce à IMS, de commencer une session vidéo en cours de communication.

L'établissement d'une liaison IMS est classiquement réalisé par le terminal mobile de l'utilisateur. Il suffit de demander un canal de données au réseau IMS pour qu'une liaison IP sécurisée soit établie et il est ensuite possible d'envoyer et de recevoir n'importe quel type de données via ce canal.

Le standard 3GPP TS 33.203 décrit les caractéristiques et mécanismes de sécurité pour sécuriser les accès à un serveur IMS et plus particulièrement comment la signalisation SIP est protégée entre l'utilisateur abonné et le serveur IMS, comment cet abonné est authentifié et comment l'abonné authentifie le serveur IMS.

Un terminal mobile implémentant IMS établit de ce fait un canal sécurisé avec le serveur IMS et protège les communications de données avec ce serveur.

En pratique, le serveur IMS et l'abonné effectuent une authentification mutuelle et les dérivations de clés. Les clés dérivées sont utilisées pour établir un canal sécurisé entre l'abonné et le serveur IMS. Ce canal sécurisé peut être établi en utilisant IP-SEC (acronyme de canal Internet sécurisé) comme décrit dans 3GPP TS 33.203.

IMS fonctionne avec tous types de réseaux (fixe, mobile ou sans fil), incluant les fonctions de commutations de paquets, comme le GPRS, l'UMTS, CDMA 2000, WLAN, WiMAX, DSL, le câble... Les systèmes plus anciens de commutation de circuit (POTS, GSM) sont supportés grâce à des passerelles (gateways). Des interfaces ouvertes entre les couches de contrôle et de services permettent de mélanger les appels / sessions de différents réseaux d'accès.

Dans les systèmes actuels, le canal IMS est entièrement géré par le terminal (généralement mobile) de l'utilisateur, typiquement constitué par un téléphone portable ou un smartphone (téléphone portable couplé à un PDA). C'est le terminal qui initie et gère la communication sur le canal IMS. Le terminal entrant en mode IMS a pour particularité d'effectuer un cryptage des données qu'il envoie et un décryptage des données qu'il reçoit du serveur IMS. Le canal physique ainsi généré est appelé canal IP-SEC.

Un terminal mobile comprend par ailleurs classiquement une carte (SIM dans un réseau 2G ou UICC embarquant une USIM dans un réseau 3G) permettant d'authentifier l'utilisateur au niveau du réseau. La carte joue uniquement un rôle dans l'authentification et la génération de clés qui donnent accès aux réseaux IMS. Mais la carte n'a, dans l'état de la technique, aucun rôle à remplir lorsque le terminal entre en mode IMS.

L'inconvénient de cette solution est que si des applications sont présentes dans la carte, par exemple une application de jeu en ligne ou une application bancaire (permettant par exemple de payer avec son terminal mobile), celles-ci ne peuvent utiliser le canal IMS car l'accès au réseau IMS nécessite une authentification et les informations transmises entre le terminal IMS et la carte sont cryptées. Faute de pouvoir mettre en oeuvre les mécanismes de sécurité adéquats, les applications de la carte ne pourront pas apparaitre comme des applications IMS. Par exemple, un utilisateur ne pourra pas effectuer un paiement à partir de son terminal mobile tout en dialoguant (par un canal voix classique) avec le marchand si l'application de paiement se trouve entièrement mise en oeuvre sur la carte.

Une solution pour remédier à ce problème pourrait consister à autoriser la carte à établir une nouvelle association de sécurité, entre la carte et le réseau IMS, indépendamment de celle géré par le terminal.

L'inconvénient de cette solution est cependant que les ressources, en terme d'infrastructure, sont limitées pour l'opérateur qui, pour permettre aux utilisateurs de son réseau de télécommunications d'exploiter simultanément un premier canal IP-SEC classique par les fonctionnalités de leurs terminaux mobiles et un second canal IP-SEC pour des fonctionnalités d'applications (programmes informatiques) résidant dans les cartes de ces terminaux mobiles, serait en théorie obligé d'adapter son infrastructure réseaux et d'augmenter ces capacités. Ceci n'est pas envisageable d'un point de vue économique.

La présente invention a pour objectif de proposer des solutions pour qu'il soit possible de stocker et d'exécuter sur la carte SIM des applications IMS.

Plus précisément, un des objectifs de la présente invention est de permettre à un utilisateur d'exploiter des applications présentes dans la carte de son terminal mobile, les données issues de ces applications (entrantes ou sortantes) transitant entre la carte et le serveur via un canal IP-SEC, et donc en mode IMS, sans augmenter le nombre de canaux IP-SEC disponibles dans le réseau.

Cet objectif, ainsi que d'autres qui apparaîtront par la suite, est atteint grâce à un procédé de partage des ressources de la liaison IP-SEC établie par le terminal. Ces ressources (en l'occurrence les paquets IP émis à l'attention du serveur IMS et ceux reçus de ce serveur) sont partagées entre le terminal et la carte.

Dans un mode de mise en oeuvre préférentiel, le partage de ressources est assuré par un serveur mandataire (ou encore proxy en langue anglaise) embarqué dans le terminal. Ce proxy peut parler le language SIP utilisé par les applications IMS.

Dans un autre mode de mise en oeuvre préférentiel, le partage de ressources est assuré par un système de type pile IP sérialisant les paquets IP transmis et reçus par le terminal et la carte. On utilise sur le terminal une application mettant en oeuvre un service de découverte des paramètres de sécurité utilisés pour la connection entre le mobile et le réseau IMS. D'autres caractéristiques et avantages de l'invention apparaîtront à la lecture suivante de deux modes de mise en oeuvre avantageux de l'invention, donnés à titre illustratif et non limitatif, et des dessins annexés dans lesquels :
- la figure 1 représente un premier mode de mise en oeuvre du procédé selon l'invention ;
- la figure 2 représente un second mode de mise en oeuvre du procédé selon l'invention.

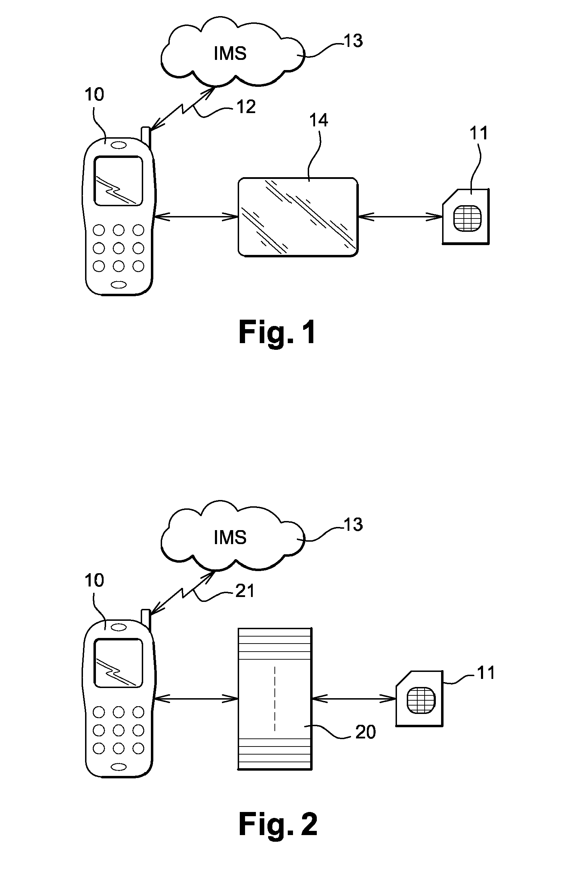

La figure 1 représente un premier mode de mise en oeuvre du procédé selon l'invention. Dans ce mode de mise en oeuvre, un serveur mandataire, aussi appelé proxy en langue anglaise, est utilisé en tant qu'interface entre le terminal et la carte.

De manière connue, un proxy est un serveur informatique qui a pour fonction de relayer des requêtes entre deux postes (par exemple un poste client et un serveur).

Sur la figure, un terminal 10, typiquement un terminal de téléphonie mobile, renferme une carte d'authentification d'abonné 11, typiquement une carte UICC (acronyme anglais de Universal Integrated Circuit Card). La carte 11 assure l'intégrité et la sécurité de tous les types de données personnelles. De manière connue, elle comporte notamment des applications SIM dans un réseau GSM et/ou des applications USIM dans un réseau UMTS

La carte 11 comporte également classiquement un processeur, des mémoires ROM, RAM et EEPROM, ainsi qu'un circuit d'interface I/O avec le terminal 10. Elle comporte en outre un module ISIM (IP Multimedia Services Identity Module).

En fonctionnement, l'utilisateur du terminal 10 est en liaison radio (canal voix non représenté) avec un autre utilisateur. De manière connue et comme déjà exposé précédemment, le terminal 10 est apte à demander l'ouverture d'un canal IMS 12 auprès d'un serveur IMS 13. Le canal 12 correspond au canal sécurisé IP-SEC précédemment évoqué. Le terminal 10 renferme à cet effet une application assurant le cryptage des données qu'il envoie au serveur 13 et un décryptage des données reçues de ce serveur 13.

Selon l'invention et afin de permettre aux applications présentes dans la carte 11 de tirer profit de l'existence du canal sécurisé 12, un serveur mandataire 14 (ou proxy en anglais) est prévu au niveau du terminal 10. La fonction du serveur proxy 14 est limitée à de l'interfaçage (fonction de répéteur) entre le terminal 10 et la carte 11 pour l'application IMS.

La carte 11 peut connaître l'existence du serveur proxy 14 par différents moyens, le plus simple étant que le terminal 10 envoie à la carte 11 une information (par exemple une APDU ou par le biais d'autre mécanisme de signalisation) lui signalant l'existence de ce serveur 14. Si une application de la carte, par exemple une application bancaire destinée à vérifier une signature, a besoin d'utiliser le canal 12, elle peut également interroger le terminal 10 pour lui demander d'ouvrir la communication via le proxy 14.

La connaissance de l'existence du proxy par la carte peut être obtenue par le stockage de l'information dans un fichier, par une APDU transmise du terminal à la carte, par une commande encapsulée dans un paquet IP, par une découverte implicite (du try-and-error) c'est-à-dire que la carte essaye de contacter le proxy : s'il répond le service démarre, s'il ne répond pas l'application s'arrête. Ces commandes ou sollicitations peuvent se faire de manière directe avec le proxy ou en contactant d'autres contacts de la carte utilisés classiquement ou nouveaux (par exemple une discovery table ou une requête de découverte sur IP).

Les données envoyées par le terminal 10 au proxy 14 (et destinées à la carte 11) ne sont pas cryptées par le terminal. Pour assurer la protection des échanges de bout-en-bout (entre par exemple l'application bancaire sur la carte et le serveur bancaire distant), le contenu des messages qui transitent en clair entre le terminal 10 et la carte 11 peut contenir des données cryptées. Lorsque la carte les reçoit, elle les traite (dans l'application IMS qu'elle contient) et les données de réponse sont donc recryptées lorsqu'elles sont renvoyées au terminal 10 via le proxy 14 dans des messages SIP non-cryptés, à l'exception de certaines données applicatives cryptées par la carte. Il peut par exemple s'agir de l'encryption d'une signature dans une application bancaire. Le terminal 10 encrypte la totalité du message SIP pour l'envoyer au serveur 13.

Ainsi, la carte 11 peut fournir et accéder à des services IMS sécurisés sans nécessiter l'ouverture d'un autre canal IP-SEC.

Une alternative à cette solution consiste à mettre en oeuvre sur le mobile un service de découverte des paramètres de l'association de sécurité établie entre le mobile et le réseau IMS. Ces paramètres comportent entre autre la liste des algorithmes d'encryption utilisés ainsi que des numéros de port à utiliser pour transmettre les données. Ces paramètres sont typiquement stockés sur le mobile dans une table qui peut être accessible aux applications IMS par l'intermédiaire d'une interface de programmation leur permettant d'utiliser le canal IP-SEC. Le service de découverte présenté ici peut utiliser les mêmes moyens que ceux disponibles pour les applications IMS.

La figure 2 représente un second mode de mise en oeuvre du procédé selon l'invention.

Dans ce second mode de mise en oeuvre, le proxy 14 de la figure 1 est remplacé par un système de pile IP 20 qui sérialise les paquets IP transmis et reçus par le terminal 10 et la carte 11. Un service de découverte peut ici aussi être mis en oeuvre pour que la carte 11 connaissance l'existence du système de pile IP 20.

Les paquets reçus du terminal 10 et de la carte 11 sont transmis dès que possible au serveur IMS 13 par une liaison sécurisée IP-SEC 21. Le même mécanisme fonctionne pour la transmission des paquets IP descendants, du serveur IMS 13 vers le terminal 10 et la carte 11.

La gestion de la pile 20 peut être laissée soit au terminal 10, soit à la carte 11, le fonctionnement étant essentiellement de type FIFO. La pile 20 peut physiquement résider dans le terminal 10 ou dans la carte 11.

Le décryptage et le cryptage des données reçues et à transmettre est réalisé localement, c'est-à-dire soit dans le terminal 10, soit dans la carte 11.

De même que pour le canal 12 de la figure 1, le canal 21 ne transporte que des paquets encryptés.

La description qui précède a été donnée à simple titre illustratif et non limitatif et l'homme du métier imaginera aisément d'autres modes de mise en oeuvre de la présente invention entrant dans le cadre des revendications.

## Revendications

1. Procédé d'établissement d'une liaison sécurisée (12, 21) entre une carte d'authentification (11) d'un abonné à un réseau de télécommunications, ladite carte (11) étant connectée à un terminal mobile (10) ledit procédé consistant à:
- établir une liaison sécurisée (12, 21) entre ledit terminal (10) et un réseau de type IMS (13) ;
- partager les ressources de ladite liaison sécurisée (12, 21) entre ledit terminal (10) et ladite carte (11).

2. Procédé selon la revendication 1, **caractérisé en ce que** ledit partage de ressources est assuré par un serveur mandataire (proxy) (14) embarqué dans ledit terminal (10).

3. Procédé selon la revendication 1, **caractérisé en ce que** ledit partage de ressources est assuré par un système de type pile IP (20) sérialisant les paquets IP transmis et reçus par ledit terminal (10) et ladite carte (11).
